# EUROPEAN PATENT SPECIFICATION

(11) **EP 0 769 242 B1**
(45) Date of publication and mention of the grant of the patent: **18.07.2001**
(21) Application number: 96202770.2
(22) Date of filing: 04.10.1996
(51) Int. Cl.: A01D 34/66, A01D 57/26

(54) **A mowing machine**
Tellermähwerk
Faucheuse

(30) Priority: 19.10.1995 NL 1001447
(43) Date of publication of application: 23.04.1997
(73) Proprietor: MAASLAND N.V., 3155 PD Maasland (NL)
(72) Inventor: Koorn, Maarten, 3123 CP Schiedam (NL)
(74) Representative: Corten, Maurice Jean F.M.

(56) References cited:
- EP-A- 0 089 257
- EP-A- 0 097 943
- EP-A- 0 165 624
- EP-A- 0 740 898
- DE-C- 4 401 500
- NL-A- 6 907 190
- NL-A- 8 601 789
- US-A- 4 117 653

## Description

The present invention relates to a mowing machine comprising a cutter bar including a carrier beam and rotatable mowing members supported by said carrier beam, which mowing members are divided into at least two groups, whereby the direction of rotation of the mowing members within a group is the same and furthermore the direction of rotation of the mowing members within one group is opposite to that of the mowing members within the other group, and, towards the centre of the cutter bar, seen in the direction of travel of the machine, is orientated rearwardly, wherein at the back of the cutter bar, between the two groups of mowing members, there is disposed a crop collecting member for creating one swath, extending at both sides of said collecting member.

Such a mowing machine is described in EP-A-0740898, which is not a prior publication.

Although with many mowing machines the direction of rotation of two juxtaposed mowing members is each time alternately opposite, it is also known to change the direction of rotation of the mowing members, e.g. in the above described configuration. In this configuration there is obtained a swath at the back of the machine, i.e. approximately behind the two juxtaposed mowing members rotating in opposite direction. It is possible to define this swath more precisely at both sides by means of swathboards, arranged at the ends of the cutter bar and extending obliquely inwardly towards the rear side. However, hereby the problem arises that, in particular upon mowing relatively short crop, there is transferred such a speed to the crop pushed inwards by the mowing members that part of the crop is thrown over the swathboards. Although it is possible to increase the height of the swathboards, in accordance with EP-A-740898 there is obtained a simpler solution by disposing, at the back of the cutter bar, between the two groups of mowing members, a crop collecting member for creating one swath, extending at both sides of said collecting member. Then the two swathboards at the ends of the cutter bar will often be superfluous. However, for a good functioning it is desirable that, of each group, on the mowing member located furthest from the crop collecting member there is provided a crop guide member, preferably constituted by a bevelled conical or hat-shaped member.

In order to obtain a good swath under changing conditions, such as different crop length, irregular crop length, different sorts of crop, etc., according to the invention the crop collecting member is disposed movably. In a practical embodiment, the crop collecting member is fitted to a frame beam located above the cutter bar. In particular the crop collecting member is disposed slidably along the frame beam, while said crop collecting member is further movable in height and/or in the direction of travel of the machine, or is possibly disposed pivotably in sideward direction. The machine may in the usual manner be provided with a protective hood; in accordance with the invention the latter has a size so as also to cover the crop collecting member.

For a better understanding of the invention and to show how the same may be carried into effect, reference will now be made, by way of example, to an embodiment shown in the accompanying drawings.
Figure 1 shows, in plan view, a mowing machine according to the invention, while

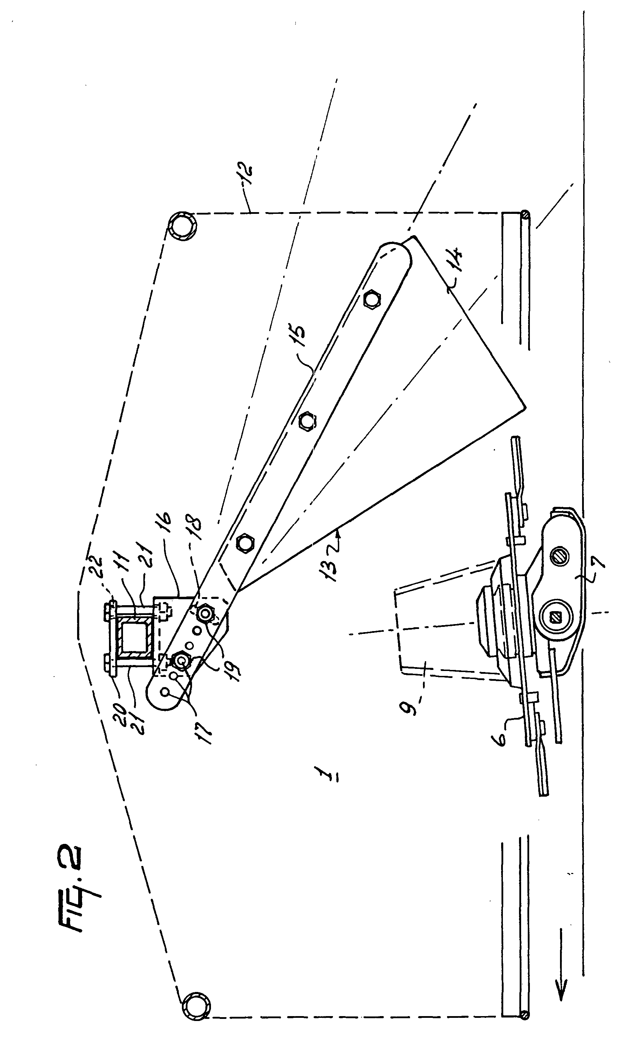

Figure 2 shows a cross-sectional view taken on the line II-II in Figure 1.

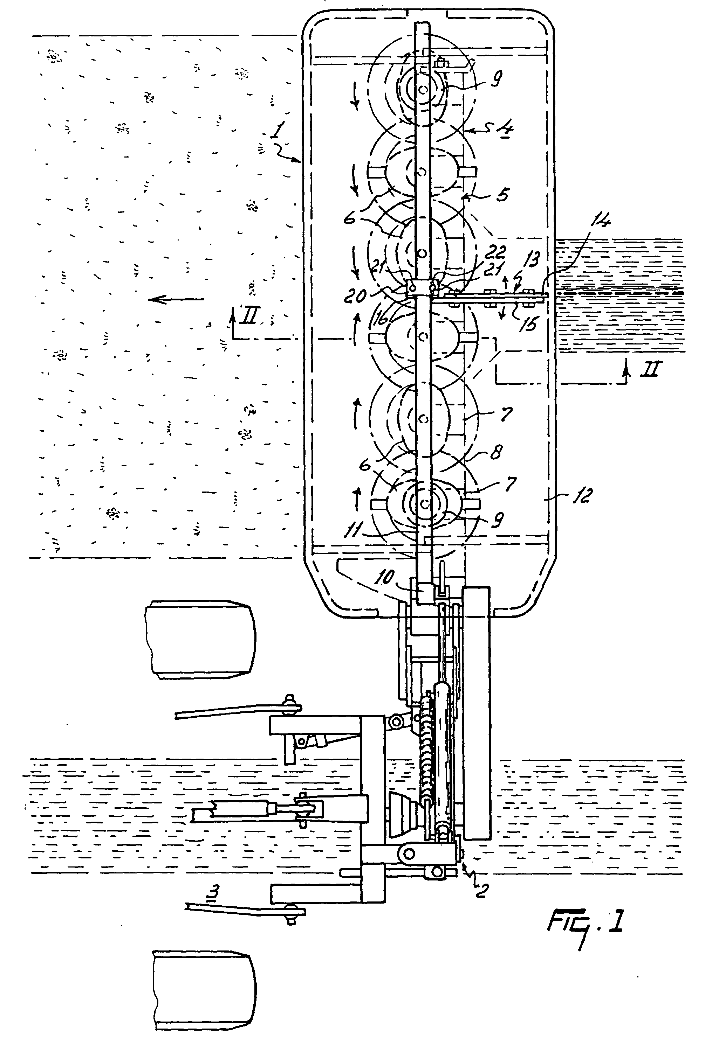

The mowing machine shown in the drawings includes a mowing section 1 connected with a carrier frame 2, by means of which the mowing machine can be coupled to the lifting hitch 3 of a tractor or similar, as is shown in Figure 1.

The mowing section 1 comprises a cutter bar 4 including a carrier beam 5 and a number of mowing members 6 - in the present embodiment amounting to six - which mowing members are rotatably supported by the carrier beam 5. In this embodiment, the carrier beam 5 is composed of a number of gearboxes 7 and intermediate elements 8 disposed therebetween. The gearboxes 7 and the intermediate elements 8 are interconnected by means of a drawing member extending in a non-shown manner over the entire length of the carrier beam 5, in such a way that the drawing member clamps the gearboxes 7 and the intermediate elements 8 against each other. The mowing members 6 are connected in a non-shown manner with shafts that are rotatably bearing-supported in the gearboxes 7, in such a way that the mowing members 6 can be brought in rotation about vertically extending rotation shafts. For the purpose of bringing the mowing members 6 in rotation during operation, there is disposed a driving shaft in the carrier beam 5 and there are provided transmission members in the gearboxes 7, in such a way that the various mowing members can be brought in rotation in the direction desired about the rotation shafts. The transmission members in the carrier beam 5 are driven in a non-shown manner via transmission members accommodated in the carrier frame 2 from the power take-off shaft of the tractor or similar, to which the mowing machine is connected by means of the carrier frame 2. In the embodiment shown in Figure 1, the juxtaposed mowing members are divided into two groups, whereby the direction of rotation of the mowing members within a group is the same. Furthermore the direction of rotation of the mowing members within one group is opposite to that of the mowing members within the other group, and, towards the centre of the cutter bar 4, seen in the direction of travel of the machine, is orientated rearwardly, as indicated by the arrows shown in Figure 1. Preferably, as shown in the present embodiment, there is disposed a crop guide member 9 on the outer mowing members of each group of mowing members. Here, the crop guide members 9 are designed as bevelled conical or hat-shaped members.

Fixed to the cutter bar 4, a beam 10 extends upwardly at the end located near the carrier frame 2. A frame beam 11, extending horizontally above the cutter bar 4, is connected with the upper end of said beam 10. On the frame beam 11 there is arranged in the usual manner a preferably folding protective hood 12.

Behind the cutter bar 4, between the two groups of mowing members, there is disposed in the mowing machine a crop collecting member 13 for creating one swath, extending on both sides of this collecting member. Said crop collecting member 13 is fastened to the frame beam 11 and located entirely or for the greater part under the protective hood 12. In the embodiment represented here, the crop collecting member 13 is constituted by a plate 14 made of an elastic or flexible material, such as rubber, which plate is fastened to a strip 15. The strip 15 is connected, upwardly pivotably and movably in its longitudinal direction, with a plate element 16. For that purpose the strip 15 is provided with a number of apertures 17, while in the plate element 16 there are provided two apertures, one of which is produced as a slotted hole 18. The strip 15 can be fixed in the latter two holes by means of bolts 19. The plate element 16 is clamped about the frame beam 11 by means of a plate element 20 and bolts 21. By producing in the plate element 20 one of the two apertures, by means of which the plate elements 16 and 20 are connected with each other around the frame beam 11, as a slotted hole 22, the crop collecting member 13 can be pivoted and be fixed in a pivoted position. The crop collecting member 13 is also slidable along the frame beam 11 and, e.g. when the number of mowing members of one group is reduced to two and that of the other group is brought to four, can be fixed in an other position on the frame beam 11 by means of the bolts 21.

## Claims

1. A mowing machine comprising a cutter bar (4) including a carrier beam (5) and rotatable mowing members (6) supported by said carrier beam (5), which mowing members (6) are divided into at least two groups, whereby the direction of rotation of the mowing members (6) within a group is the same and furthermore the direction of rotation of the mowing members (6) within one group is opposite to that of the mowing members (6) within the other group, and, towards the centre of the cutter bar, seen in the direction of travel of the machine, is orientated rearwardly, wherein at the back of the cutter bar (4), between the two groups of mowing members (6), there is disposed a crop collecting member (13) for creating one swath, extending at both sides of said collecting member (13), characterized in that the crop collecting member (13) is disposed movably.

2. A mowing machine as claimed in claim 1, characterized in that, of each group, on the mowing member (6) located furthest from the crop collecting member (13) there is provided a crop guide member (9).

3. A mowing machine as claimed in claim 2, characterized in that this crop guide member (9) is designed as a bevelled conical or hat-shaped member.

4. A mowing machine as claimed in any one of the preceding claims, characterized in that the crop collecting member (13) is fitted to a frame beam (11) located above the cutter bar (4).

5. A mowing machine as claimed in claim 4, characterized in that the crop collecting member (13) is disposed slidably along the frame beam (11).

6. A mowing machine as claimed in any one of the preceding claims, characterized in that the crop collecting member (13) is movable in height.

7. A mowing machine as claimed in any one of the preceding claims, characterized in that the crop collecting member (13) is movable in the direction of travel of the machine.

8. A mowing machine as claimed in any one of the preceding claims, characterized in that the crop collecting member (13) is disposed pivotably in sideward direction.

9. A mowing machine as claimed in any one of the preceding claims, characterized in that a protective hood (12) is arranged over the cutter bar (4) so as also to cover the crop collecting member (13).

## Patentansprüche

1. Mähmaschine mit einem Mähbalken (4), der einen Träger (5) und drehbare Mähglieder (6) aufweist, die an dem Träger (5) abgestützt sind, wobei die Mähglieder (6) in mindestens zwei Gruppen unterteilt sind, wobei die Drehrichtung der Mähglieder (6) innerhalb einer Gruppe dieselbe ist und außerdem die Drehrichtung der Mähglieder (6) innerhalb einer Gruppe entgegengesetzt zu derjenigen der Mähglieder (6) innerhalb der anderen Gruppe und zur Mitte des Mähbalkens hin in bezug auf die Arbeitsrichtung der Maschine nach hinten gerichtet ist, wobei auf der Rückseite des Mähbalkens (4) zwischen den beiden Gruppen von Mähgliedern (6) ein Gutaufnahmeglied (13) angeordnet ist, das einen sich beiderseits des Aufnahmegliedes (13) erstreckenden Schwad erzeugt,
dadurch gekennzeichnet, daß das Gutaufnahmeglied (13) beweglich angeordnet ist.

2. Mähmaschine nach Anspruch 1,
dadurch gekennzeichnet, daß bei jeder Gruppe auf dem Mähglied (6), das am weitesten von dem Gutaufnahmeglied (13) entfernt ist, ein Gutführungsglied (9) angeordnet ist.

3. Mähmaschine nach Anspruch 2,
dadurch gekennzeichnet, daß dieses Gutführungsglied (9) als abgeschrägtes konisches oder haubenförmiges Glied ausgebildet ist.

4. Mähmaschine nach einem der vorhergehenden Ansprüche,
dadurch gekennzeichnet, daß das Gutaufnahmeglied (13) an einem Rahmenträger (11) angebracht ist, der über dem Mähbalken (4) angeordnet ist.

5. Mähmaschine nach Anspruch 4,
dadurch gekennzeichnet, daß das Gutaufnahmeglied (13) an dem Rahmenträger (11) verschiebbar angeordnet ist.

6. Mähmaschine nach einem der vorhergehenden Ansprüche,
dadurch gekennzeichnet, daß das Gutaufnahmeglied (13) höhenbewegbar ist.

7. Mähmaschine nach einem der vorhergehenden Ansprüche,
dadurch gekennzeichnet, daß das Gutaufnahmeglied (13) in Arbeitsrichtung der Maschine bewegbar ist.

8. Mähmaschine nach einem der vorhergehenden Ansprüche,
dadurch gekennzeichnet, daß das Gutaufnahmeglied (13) in Seitwärtsrichtung schwenkbar ist.

9. Mähmaschine nach einem der vorhergehenden Ansprüche,
dadurch gekennzeichnet, daß eine Schutzhaube (12) über dem Mähbalken (4) derart angeordnet ist, daß auch das Gutaufnahmeglied (13) abgedeckt ist.

## Revendications

1. Faucheuse comportant une barre de fauchage (4) incluant une poutre porteuse (5) et des organes de fauchage rotatifs (6) supportés par ladite poutre porteuse (5), organes de fauchage (6) qui sont divisés en au moins deux groupes, de sorte que la direction de rotation des organes de fauchage (6) d'un groupe est la même, et par ailleurs la direction de rotation des organes de fauchage (6) d'un premier groupe est opposée à celle des organes de fauchage (6) de l'autre groupe, et, vers le centre de la barre de fauchage, vue dans la direction de déplacement de la machine, est orientée vers l'arrière, dans laquelle à l'arrière de la barre de fauchage (4), entre les deux groupes d'organes de fauchage (6), on a disposé un organe de récupération de récolte (13) destiné à créer un andain, s'étendant des deux côtés dudit organe de récupération (13), caractérisée en ce que l'organe de récupération de récolte (13) est disposé de manière amovible.

2. Faucheuse selon la revendication 1, caractérisée en ce que, sur l'organe de fauchage (6) de chaque groupe positionné le plus loin de l'organe de récupération de récolte (13), est agencé un élément de guidage de récolte (9).

3. Faucheuse selon la revendication 2, caractérisée en ce que cet élément de guidage de récolte (9) est conçu sous la forme d'un élément conique biseauté ou d'un élément en forme de chapeau.

4. Faucheuse selon l'une quelconque des revendications précédentes, caractérisée en ce que l'organe de récupération de récolte (13) est agencé sur une poutre de châssis (11) positionnée au-dessus de la barre de fauchage (4).

5. Faucheuse selon la revendication 4, caractérisée en ce que l'organe de récupération de récolte (13) est disposé de manière coulissante le long de la poutre de châssis (11).

6. Faucheuse selon l'une quelconque des revendications précédentes, caractérisée en ce que l'organe de récupération de récolte (13) est mobile en hauteur.

7. Faucheuse selon l'une quelconque des revendications précédentes, caractérisée en ce que l'organe de récupération de récolte (13) est mobile dans la direction de déplacement de la machine.

8. Faucheuse selon l'une quelconque des revendications précédentes, caractérisée en ce que l'organe de récupération de récolte (13) est disposé de manière pivotante dans une direction latérale.

9. Faucheuse selon l'une quelconque des revendications précédentes, caractérisée en ce qu'un capot de protection (12) est agencé au-dessus de la barre de fauchage (4), de manière à recouvrir également l'organe de récupération de récolte (13).
